# EUROPEAN PATENT APPLICATION

(11) **EP 3 163 072 A1**
(43) Date of publication of application: **03.05.2017**
(21) Application number: 16002300.8
(22) Date of filing: 28.10.2016
(51) Int. Cl.: F03D 1/04

(54) **POWER GENERATING SYSTEM**

(30) Priority: 29.10.2015 ES 201531545
(71) Applicant: Etxebarria Barruetabena, Jon Inaki, 48340 Amorebieta - Etxano (Bizkaia) (ES)
(72) Inventor: Etxebarria Barruetabena, Jon Inaki, 48340 Amorebieta - Etxano (Bizkaia) (ES)
(74) Representative: Villamor Muguerza, Jon

(57) **Abstract**

The present invention relates to an energy generating system comprising a Venturi tube (1) formed from a plurality of conical, hollow filiform modules (1a, 1b, 1c) fitted to one another such that they form said tube (1) with the dimensions required for each specific installation, increasing and optimizing the resources required for the correct operation thereof; and wherein the first module (1a) of the Venturi tube (1) serves as a base and will have therein a rotor of a turbine (2); and wherein the remaining modules (1b, 1c) have therein laminar and/or helical blades (3) radially distributed with respect to the axis of the module in which they are located, such that they form a spiral advancing from the largest part to the smallest part.

## Description

### TECHNICAL FIELD

The object of the present specification is an energy generating system based on a device or system submerged in fluid (river, channel or canal, etc.), and the main feature of which lies in the sizing of the fluid accelerating element, given that it can be scaled such that the elements forming it are fitted to one another, depending on the requirements of each installation.

Similarly, the system herein described will accelerate and increase fluid speed (due to the vortex effect created therein), which causes a greater angle of incidence of the fluid on the blades or vanes of the generating turbine.

### PRIOR ART

Transformations of the kinetic energy of a fluid into rotational or electrical energy based on the application of Bernoulli and Venturi effects in a continuous fluid without mass loss are known in the energy sector, and more specifically in the field of micro-turbines. The purpose of such transformations lies in increasing the incidence speed of the fluid on the turbine, or application, the turbine being required to have higher revolutions.

The foregoing is in line with the continuity and mechanical energy conservation principles, given that the sum of kinetic energy, potential energy and pressure energy of the fluid, as well as the flow rate, must be kept constant at all times, except for losses.

There are many inventions in the prior art that aim to utilize energies generated by fluids in general, and more specifically, the kinetic energy and the pressure of water running through any conduit, and the case of utilizing fluid potential as well.

Solutions using the Bernoulli and Venturi principles, as well as those using for the operation thereof the laminar surface of fluids and fluid immersion, are also known.

A notable example of this is patent document WO2014188015 which describes an energy-generating facility formed by an aquatic turbine which uses energy from moving water currents, entirely or partially submerged below the aquatic surfaces, anchored by means of a TLP (Tension Leg Platform) system which uses one or more vertical tendons connected at one end to the turbine/turbines by means of connectors, and at the other end to a system for anchoring to the bottom, or to an artifact which absorbs the traction loads of the tendons, limiting the movement of the turbine. Each turbine comprises a body called a nozzle exposed to the incident aquatic current and housing a propeller which, moved by the water current, actuates a generator, there being the possibility of incorporating one or more bodies called diffusers to the rear of the nozzle.

Other examples of turbines present in the prior art are of those wind turbines that can be adapted to other fluids such as marine fluids or fluids from large riverbeds.

The invention herein proposed with respect to those described in the prior art considers combining the Bernoulli and Venturi principles with vortex effect principles using said effect in a rotational direction to provide improvement and rotational energy generation.

The invention herein proposed provides satisfactory improvements to be introduced in generating turbines, satisfactorily and generally improving said problems, the invention furthermore being easy to configure and apply.

The proposed invention is furthermore an efficient solution due to the possibility of configuring different versions and models, to its customized configuration and to its modular application based on the requirements of each location, and all this with maximum simplicity and efficiency.

### DISCLOSURE OF THE INVENTION

The energy generating system object of the present invention is characterized in that it comprises a Venturi tube formed from a plurality of conical, hollow filiform modules fitted to one another such that they form said tube with the dimensions required for each specific installation, increasing and optimizing the resources required for the correct operation thereof; and wherein the first module of the Venturi tube serves as a base and will have therein a rotor of a turbine; and the remaining modules will have therein laminar and/or helical blades radially distributed with respect to the axis of the module in which they are located, such that they form a spiral advancing from the largest part to the smallest part.

The design of the invention is based on the combination of a Venturi tube with internal rotational laminar flow and its self-fitting, scalable modular configuration.

It will therefore improve the angle of incidence of the fluid flow on the vanes of the turbine as it is tangent to its spiral. Furthermore, it will increase the flow rate as it travels through more space, a circular flow being transformed into a laminar flow, taking as a reference the same vector of the axis of the Venturi tube mentioned above.

As a result of its design, the invention herein proposed optimally and satisfactorily solves the problems described above simply by implementing a series of radially distributed helical-shaped inner blades integrally to each module, and in the non-interfering areas in the self-fitting between modules.

The fluid flow rate introduced in the tube is therefore being progressively transformed into a laminar and helical flow (originating from a laminar flow), until the turbine reaches an angle of incidence as if it were a nozzle.

Similarly, the fluid speed introduced in the Venturi tube gradually increases at the expense of its pressure (due to the known Venturi effect principle), and furthermore, in the case at hand, said effect is improved since the virtual travel of a helical path is always greater than that of its virtual axis, so it will have a greater speed for one and the same virtual axis so that it ends up acting as if it were a stator or nozzle.

In summary, it can therefore be said that the invention herein described successfully introduces a new concept in the technical field in which it is comprised (referred to as vortex or magnus effect), and furthermore simplifies the construction of energy generating systems by means of using modular Venturi tubes, simplifying and scaling installations with the subsequent cost savings this entails (in construction, transport, assembly and/or maintenance).

Throughout the description and claims the word "comprises" and variants thereof do not intend to exclude other technical features, additions, components or steps. For those skilled in the art, other objects, advantages and features of the invention will be deduced in part from the description and in part from putting the invention into practice. The following examples and drawings are provided by way of illustration, and they are not intended to restrict the present invention. Furthermore, the present invention covers all the possible combinations of particular and preferred embodiments herein indicated.

### BRIEF DESCRIPTION OF THE DRAWINGS

A series of drawings that help to better understand the invention and expressly related to an embodiment of said invention, presented as a non-limiting example thereof, are very briefly described below.

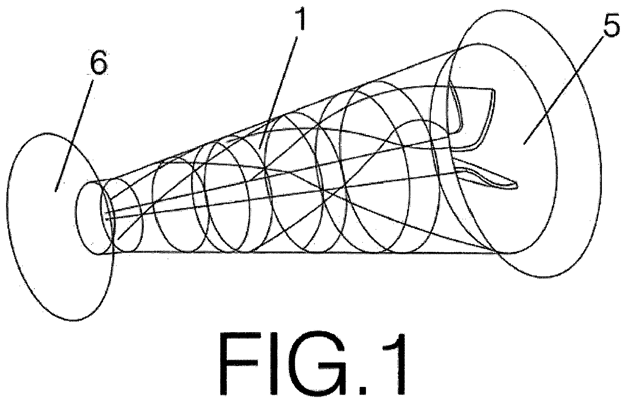

Figure 1 shows a general perspective view of the energy generating system.

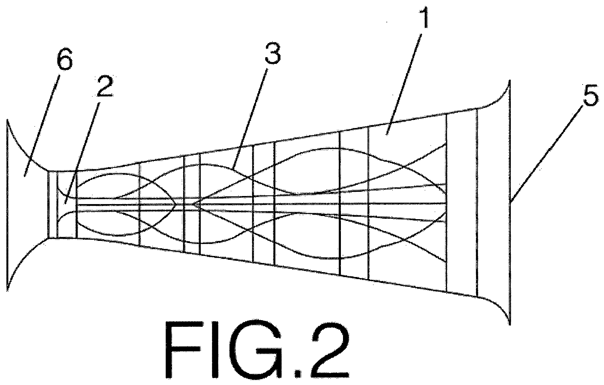

Figure 2 shows a side view of the energy generating system.

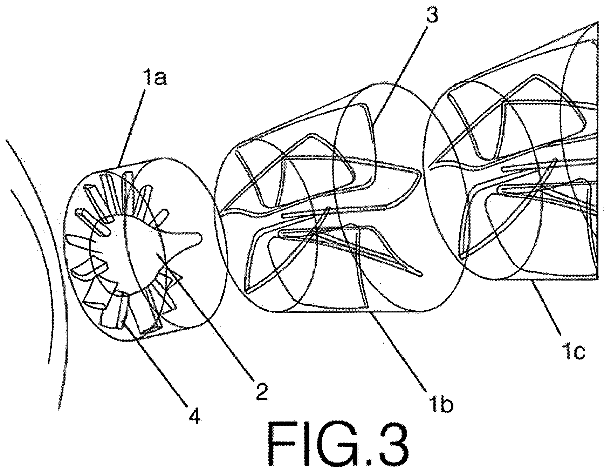

Figure 3 shows a view of the assembly of the modules forming the energy generating system.

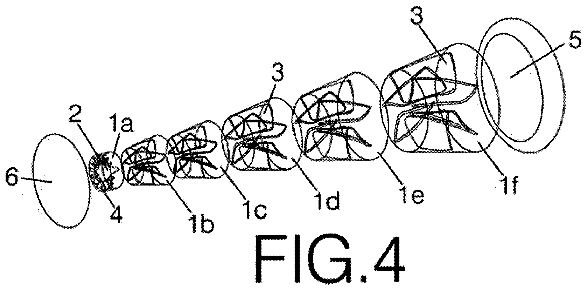

Figure 4 shows a second view of the assembly of the modules forming the energy generating system.

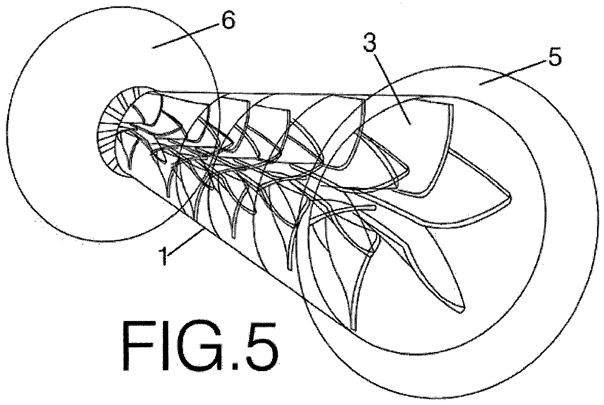

Figure 5 shows a perspective view of the energy generating system.

### DETAILED DISCLOSURE OF THE INVENTION

The attached drawings show a preferred embodiment of the invention. More specifically, the energy generating system object of the present specification is characterized in that it comprises a Venturi tube (1) formed from a plurality of conical, hollow filiform modules (1a, 1b, 1c, 1 d, 1e, 1f) fitted to one another such that they form said tube (1) with the dimensions required for each specific installation, increasing and optimizing the resources required for the correct operation thereof.

The first module (1a) of the Venturi tube (1) will serve as a base and will have therein a rotor of a turbine (2). The remaining modules (1b, 1c, 1 d, 1e, 1f) will have therein laminar and/or helical blades (3) radially distributed with respect to the axis of the module in which they are located, such that they form a spiral advancing from the largest part to the smallest part.

This helical shape will allow creating inside the tube (1) a rotational laminar flow of the fluid housed therein, and will furthermore allow improving the angle of incidence of the fluid flow on the blades (4) of the turbine (2) as it is arranged tangent to the spiral formed by the fluid. Similarly, it will increase the fluid flow rate as it travels through more space as a result of said shape, transforming a laminar flow into a circular flow, taking as a reference the axis of the Venturi tube (1).

The Venturi tube (1) will incorporate at its ends a respective intake opening (5) and a respective release opening (6) by way of inlet and outlet, respectively.

In a preferred embodiment, the modules (1a, 1b, 1c, 1d, 1e, 1f) are fitted both on the outside and inside thereof, as a result of the conical effect of the shape of the mentioned modules (1a, 1b, 1c, 1 d, 1e, 1f) and will be assembled together by flanges, screws or equivalent means.

In a particular embodiment, the tube (1) can incorporate helical filiform elements or means, blades or other equivalent means, arranged against the walls thereof in a continuous or discontinuous manner, and the purpose of which is to aid in creating the rotational flow that allows energy generation.

In a particular embodiment, the turbine (2) present in the first module will incorporate several rotors for balancing pressures.

## Claims

1. An energy generating system, **characterized in that** it comprises a Venturi tube (1) formed from a plurality of conical, hollow filiform modules (1a, 1 b, 1c, 1 d, 1e, 1f) fitted to one another such that they form said tube (1) with the dimensions required for each specific installation, increasing and optimizing the resources required for the correct operation thereof; and wherein the first module (1a) of the Venturi tube (1) serves as a base and will have therein a rotor of a turbine (2); and wherein the remaining modules (1b, 1c, 1d, 1e, 1f) have therein laminar and/or helical blades (3) radially distributed with respect to the axis of the module in which they are located, such that they form a spiral advancing from the largest part to the smallest part.

2. The system according to claim 1, wherein the Venturi tube (1) incorporates at its ends a respective intake opening (5) and a respective release opening (6) by way of an inlet and an outlet, respectively.

3. The system according to any of claims 1 to 2, wherein the modules (1 a, 1 b, 1 c, 1d, 1e, 1f) are fitted both on the outside and inside thereof and are assembled together by flanges, screws or equivalent means.

4. The system according to any of claims 1 to 3, wherein the tube (1) incorporates helical filiform elements, blades or other equivalent means, arranged against the walls thereof in a continuous or discontinuous manner, and the purpose of which is to aid in creating the rotational flow that allows energy generation.

5. The system according to any of the preceding claims, wherein the turbine (2) present in the first module (1a) incorporates several rotors for balancing pressures.
